**Europäisches Patentamt**

**European Patent Office**

**Office européen des brevets**

(11) Veröffentlichungsnummer: **0 051 274**
**B1**

## EUROPÄISCHE PATENTSCHRIFT

(45) Veröffentlichungstag der Patentschrift:
24.10.84

(51) Int. Cl.³: **G 02 B 27/17, H 04 N 3/08**

(21) Anmeldenummer: **81109171.9**

(22) Anmeldetag: **29.10.81**

(54) **Vorrichtung zur Bildfeldabtastung.**

(30) Priorität: **03.11.80 DE 3041279**

(43) Veröffentlichungstag der Anmeldung:
**12.05.82 Patentblatt 82/19**

(45) Bekanntmachung des Hinweises auf die Patenterteilung:
**24.10.84 Patentblatt 84/43**

(84) Benannte Vertragsstaaten:
**CH FR GB IT LI NL SE**

(56) Entgegenhaltungen:
**GB - A - 2 023 369**
**US - A - 3 287 559**
**US - A - 3 790 246**
**US - A - 4 097 115**
**US - A - 4 106 845**
**US - A - 4 180 307**

(73) Patentinhaber: **Zeifang, Günter, Dr.,**
**Kurt-Lindemann-Strasse 29, D-6903 Neckargemünd (DE)**

(72) Erfinder: **Zeifang, Günter, Dr.,**
**Kurt-Lindemann-Strasse 29, D-6903 Neckargemünd (DE)**

(74) Vertreter: **Ullrich, Thurmod, Dr., Patentanwälte Dr.**
**Ullrich-Dr. Hasse-Dr. Franke Gaisbergstrasse 3,**
**D-6900 Heidelberg 1 (DE)**

# Beschreibung

Die Erfindung betrifft eine Vorrichtung zur Bildfeldabtastung in zwei zueinander im wesentlichen senkrechten Abtasteinrichtungen, mit zwei für diese beiden Richtungen voneinander getrennten Abtasteinrichtungen, einem konkaven Spiegel, über den eine Abbildung der Pupille der einen Abtasteinrichtung in die Pupille der anderen Abtasteinrichtung erfolgt, und einem optischen System, das in die Vorrichtung parallel eintretende Bündel nach dem Verlassen der Abtasteinrichtungen auf einen Detektor als Signalempfänger fokussiert.

Aus der US-Patentschrift 4 106 845 ist ein mit hoher Geschwindigkeit arbeitendes Abtastsystem bekannt, bei dem eine mechanische Abtastung durch ein rotierendes Polygon erfolgt, wobei das Bild durch ein afokales Teleskop-System auf das rotierende Polygon gebracht wird, das die Zeilenabtastung bewirkt und die Bildabtastung durch einen schwingenden Spiegel erfolgt.

Diese bekannte Vorrichtung besitzt einen wesentlichen Nachteil, da die Abbildung durch den Spiegel zusätzlich zum Öffnungsfehler noch mit Koma und Astigmatismus belastet ist, da die optische Achse des Spiegels schräg zum einfallenden Strahlenbündel angeordnet ist. Durch die Art der bekannten Anordnung entsteht auch noch eine Bilddrehung während der Abtastung, so dass beide Effekte zu einer erheblichen Verschlechterung der Bildqualität beitragen.

Der Erfindung liegt nun die Aufgabe zugrunde eine Vorrichtung der bekannten Art dahingehend zu verbessern, dass das Bildfeld geradlinig mit konstanter Winkelgeschwindigkeit bei hohen Abtastgeschwindigkeiten abgetastet und das Gesichtsfeld den jeweiligen Bedingungen oder Aufgaben angepasst werden kann.

Die Lösung dieser Aufgabe wird durch die technische Lehre vermittelt, dass die Abbildung der Pupille durch ein afokales optisches System erfolgt, welches aus dem konkaven Spiegel und einem dazu konzentrischen konvexen Spiegel mit dem halben Krümmungsradius des konkaven Spiegels besteht und welches so angeordnet ist, dass der gemeinsame Krümmungsmittelpunkt in der Mitte der Verbindungslinie der Drehpunkte der Abtastungen liegt, und dass das optische System Parallelbündel auf den Detektor fokussiert.

In den Zeichnungen ist die Erfindung in verschiedenen Ausführungsbeispielen dargestellt.

Es zeigen:

Fig. 1 und 2 schematisch den Aufbau der Abtastvorrichtung und den Strahlenverlauf unter Verwendung eines rotierenden Spiegelpolygons mit zur Drehachse parallelen Polygonflächen in Seitenansicht und Draufsicht.

Fig. 3 und 4 schematisch eine andere Anordnung ebenfalls unter Verwendung eines rotierenden Spiegelpolygons mit zur Drehachse parallelen Polygonflächen in Seitenansicht und Draufsicht.

Fig. 5 schematischh die Seitenansicht unter Verwendung eines Polygons mit zur Drehachse geneigten Flächen, sowie unter Verwendung einer konzentrischen Bouwers-Linse.

Fig. 6 schematisch eine Seitenansicht unter Verwendung einer konzentrischen Bouwers-Linse 12, wobei der konvexe Spiegel 9 auf die Bouwers-Linse aufgedampft ist.

Zur einfacheren Beschreibung der Abtastvorrichtung wird der Strahlungsempfänger als Strahlungssender angesehen, dessen Strahlung durch die Abtastvorrichtung über das Sehfeld geführt wird.

Die vom Detektor 1 ausgehende Strahlung wird durch das Abbildungssystem 2 in ein Parallelbündel umgeformt, d.h. der Detektor wird durch das Abbildungssystem 2 ins Unendliche abgebildet. Das Parallelbündel trifft dann auf die erste Abtasteinrichtung, vorzugsweise ein mit einer Winkelgeschwindigkeit w rotierendes Spiegelpolygon 3. Der Hauptstrahl des Bündels schwenkt dann mit der doppelten Winkelgeschwindigkeit 2w um einen Punkt 4 herum. Dieser Punkt 4 ist der Mittelpunkt der Pupille der Zeilenabtastung. Das Strahlenbündel trifft dann auf einen konkaven Spiegel 5 mit dem Krümmungsradius R, dessen Krümmungsmittelpunkt 6 in der Ebene der Pupille der Zeilenabtastung liegt. Das vom konkaven Spiegel 5 erzeugte Bild 7 des Detektors 1 beschreibt dann einen Kreisbogen 8 mit dem Radius R/2 um den Punkt 6 in einer Ebene, die parallel zu der Ebene ist, welche durch die abgelenkten Hauptstrahlen gebildet wird. In der Bildkurve 8 befindet sich ein konvexer Spiegel 9, dessen Krümmungsradius mit dem Krümmungsradius der Bildkurve 8 zusammenfällt. Von diesem Spiegel 9 wird das Strahlenbüschel zum konkaven Spiegel 5 zurückreflektiert und von diesem in ein paralleles Bündel umgeformt. Alle Zentralstrahlen der parallelen Bündel schneiden sich in einem Punkt 10. Dieser Punkt 10 ist das Bild des Punktes 4 und damit die Mitte eines Bildes der Pupille der Zeilenabtastung. In diesem Pupillenbild befindet sich die zweite Abtastvorrichtung, vorzugsweise ein oszillierender Spiegel 11 zur Bildfeldabtastung.

Selbstverständlich können auch beide Abtasteinrichtungen als Spiegelpolygone oder oszillierende Spiegel ausgebildet sein. Ebenso kann die erste Abtasteinrichtung aus einem oszillierenden Spiegel und die zweite aus einem rotierenden Spiegelpolygon bestehen, wobei in diesem Fall vorzugsweise die erste Abtasteinrichtung die Bildfeldabtastung und die zweite die Zeilenabtastung bewirkt.

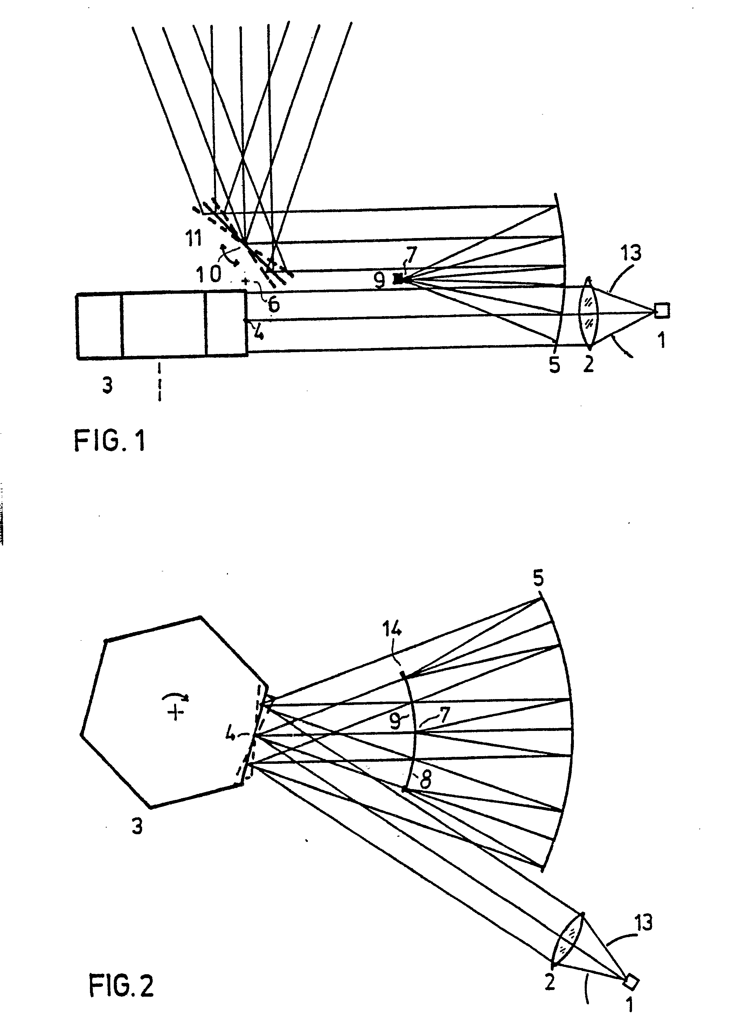

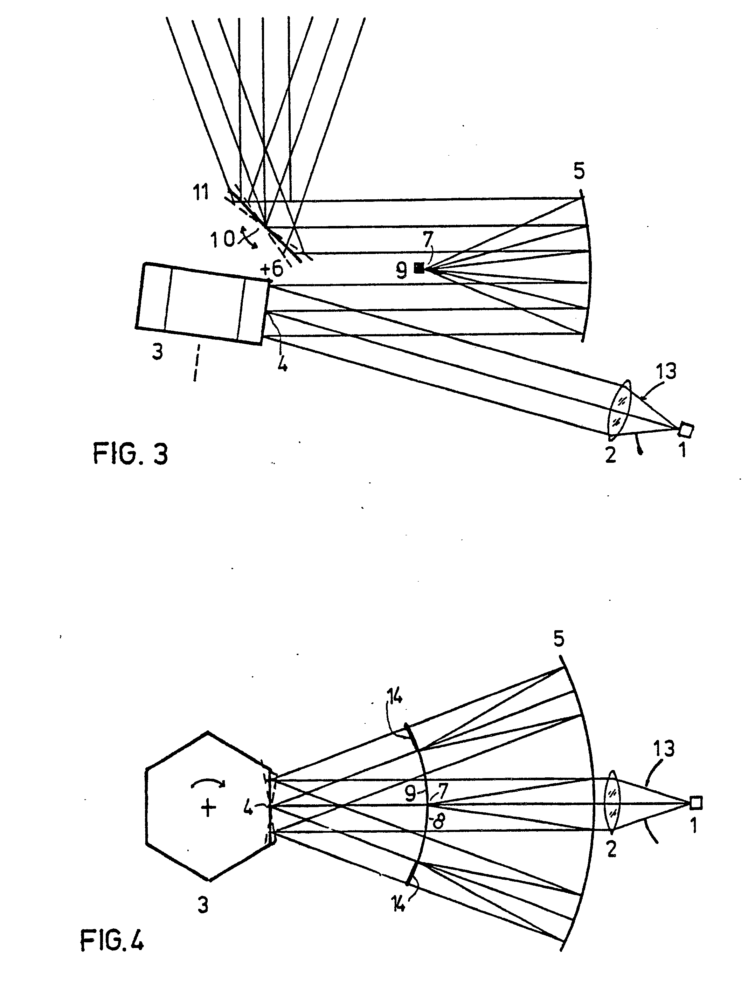

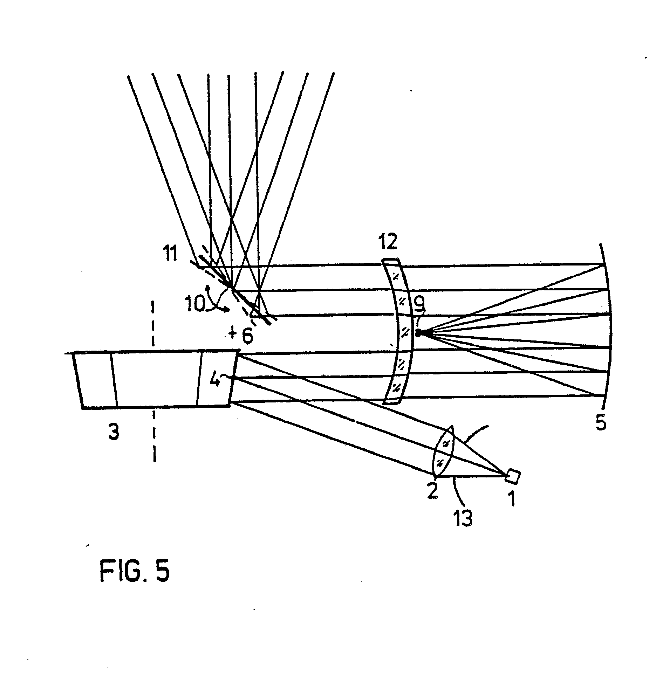

Das rotierende Spiegelpolygon 3 kann als Polygon mit zur Drehachse parallelen Flächen (Fig. 1, 2, 3 und 4) oder als Polygon mit zur Drehachse geneigten Flächen (Fig. 5) ausgebildet sein.

Die Abbildung durch einen sphärischen Spiegel 5 weist gewisse Abbildungsfehler auf. Je nach Anforderung an die Abbildungsqualität sind optische Korrekturen erforderlich oder nicht. Zur Korrektur kann in an sich bekannter Weise der konkave Spiegel 5 als Mangin-Spiegel ausgebildet sein oder eine vorzugsweise konzentrische Bouwers-Linse 12 in den Strahlengang eingebracht werden (Fig. 5). Ebenso kann der Spiegel 5 asphärisch sein. Weiterhin sind Kombinationen verschiedener Korrekturen möglich.

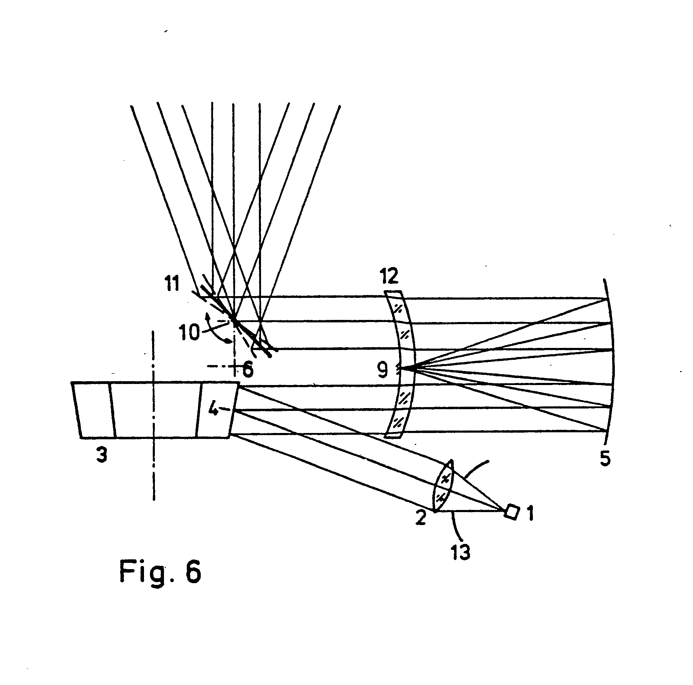

Eine weitere vorteilhafte Ausbildung der Erfindung ist in Fig. 6 dargestellt. Hier ist die konzentrische Bouwers-Linse 12, die für beide Flächen den gleichen Krümmungsmittelpunkt 6 wie der sphärische Spiegel 5 hat, so ausgebildet und angeordnet, dass die Ortskurve 8 des Detektorbildes 7 auf der dem konkaven Spiegel 5 abgewandten Fläche der Bouwers-Linse liegt. Der konvexe Spiegel 9 ist hier als Spiegelstreifen auf diese Fläche der Bouwers-Linse aufgedampft. Durch die für den ganzen Abtastbereich rotationssymmetrische Anordnung der Bouwers-Linse und des sphärischen Spiegels ist die Abbildung über den ganzen Abtastbereich von gleicher Qualität. Durch eine entsprechende Dimensionierung der Bouwers-Linse 12 können die Abbildungsfehler des sphärischen Spiegels 5 korrigiert und so über den ganzen Abtastwinkel eine beugungsbegrenzte Abbildung erreicht werden.

Diese Ausbildung hat den weiteren Vorteil, dass sich kein Staub, der die Abbildung sehr störend beeinflusst, auf dieser Bildfläche ablagern kann.

Wird das Abtastverfahren in einem Empfangssystem für Infrarotstrahlen angewendet, so dient der Autokollimationsspiegel 3 zur Störstrahlungsunterdrückung. Dieser sphärische Spiegel, dessen Krümmungsmittelpunkt sich am Ort des Detektors 1 befindet, begrenzt den Aperturwinkel der einfallenden Strahlung und reflektiert ausserhalb dieses Winkels die «kalte» Strahlung des gekühlten Detektors auf diesen zurück. Dieser Detektor kann aus einem einzelnen Element oder einer Anordnung von mehreren Elementen bestehen.

Während der Totzeit, d.h. während eine Kante des Polygons 3 durch das vom Abbildungssystem 2 kommende Strahlenbündel läuft, entstehen 2 Teilbilder des Detektors 1 ausserhalb des nutzbaren Bildfeldes. Wird hier eine Begrenzungsblende 14, die auch temperaturstabilisiert sein kann, angebracht, so trifft während der Totzeit definierte Strahlung auf den Detektor. Sie kann für die weitere elektronische Verarbeitung als Referenzstrahlung verwendet werden.

**Patentansprüche**

1. Vorrichtung zur Bildfeldabtastung in zwei zueinander im wesentlichen senkrechten Abtasteinrichtungen, mit zwei für diese beiden Richtungen voneinander getrennten Abtasteinrichtungen, einem konkaven Spiegel, über den eine Abbildung der Pupille der einen Abtasteinrichtung (3) in die Pupille der anderen Abtasteinrichtung (11) erfolgt, und einem optischen System, das in die Vorrichtung parallel eintretende Bündel nach dem Verlassen der Abtasteinrichtungen auf einen Detektor als Signalempfänger fokussiert, dadurch gekennzeichnet, dass die Abbildung der Pupille durch ein afokales optisches System erfolgt, welches aus dem konkaven Spiegel (5) und einem dazu konzentrischen konvexen Spiegel (9) mit dem halben Krümmungsradius des konkaven Spiegels (5) besteht und welches so angeordnet ist, dass der gemeinsame Krümmungsmittelpunkt (6) in der Mitte der Verbindngslinie der Drehpunkte (4, 10) der Abtastungen liegt, und dass das optische System (2) Parallelbündel auf den Detektor (1) fokussiert.

2. Vorrichtung nach Anspruch 1, dadurch gekennzeichnet, dass die erste Abtasteinrichtung als rotierendes Spiegelpolygon (3) und die zweite Abtasteinrichtung als schwenkbarer Spiegel (11) ausgebildet ist.

3. Vorrichtung nach Anspruch 1, dadurch gekennzeichnet, dass die erste Abtasteinrichtung als schwenkbarer Spiegel und die zweite Abtasteinrichtung als rotierendes Spiegelpolygon ausgebildet ist.

4. Vorrichtung nach Anspruch 1, dadurch gekennzeichnet, dass die erste und die zweite Abtasteinrichtung als rotierende Spiegelpolygone ausgebildet sind.

5. Vorrichtung nach Anspruch 1, dadurch gekennzeichnet, dass die erste und die zweite Abtasteinrichtung als schwenkbare Spiegel ausgebildet sind.

6. Vorrichtung nach einem der Ansprüche 2 bis 4, dadurch gekennzeichnet, dass die Spiegelflächen des Polygons parallel zur Drehachse desselben angeordnet sind.

7. Vorrichtung nach einem der Ansprüche 2 bis 4, dadurch gekennzeichnet, dass die Spiegelflächen des Polygons geneigt zur Drehachse desselben angeordnet sind.

8. Vorrichtung nach einem der vorstehenden Ansprüche, dadurch gekennzeichnet, dass der konkave Spiegel (5) asphärisch ausgebildet ist.

9. Vorrichtung nach einem der vorstehenden Ansprüche, dadurch gekennzeichnet, dass der konkave Spiegel (5) als Mangin-Spiegel ausgebildet ist.

10. Vorrichtung nach einem der vorstehenden Ansprüche, dadurch gekennzeichnet, dass im Strahlengang des konkaven Spiegels (5) eine vorzugsweise konzentrische Bouwers-Linse angeordnet ist.

11. Vorrichtung nach einem der vorstehenden Ansprüche, dadurch gekennzeichnet, dass konzentrisch in dem Strahlengang des sphärischen Spiegels (5) eine konzentrische Bouwers-Linse so ausgebildet und angeordnet ist, dass die Ortskurve (8) des Detektorbildes (7) auf einer der Flächen der Bouwers-Linse (12) liegt und dass der konvexe Spiegel (9) an dieser Stelle als Spiegelstreifen auf die Bouwers-Linse (12) aufgedampft ist.

12. Vorrichtung nach einem der vorstehenden Ansprüche, dadurch gekennzeichnet, dass für den Detektor (1) ein Autokollimationsspiegel vorgesehen ist, der mit seiner Öffnung den Aperturwinkel der einfallenden Strahlung begrenzt, und der ausserhalb dieses Winkels die vom Detektor ausgehende Strahlung auf diesen zurückwirft.

13. Vorrichtung nach einem der vorstehenden Ansprüche, dadurch gekennzeichnet, dass am Rande der Ortskurve (8) symmetrisch zur optischen Achse eine Begrenzungsblende, die als Referenzstrahler dient, angeordnet ist.

**Claims**

1. A device for scanning an image field in two scanning directions which are substantially perpendicular to each other, having two scanning devices, separated from each other, for the two directions, a concave reflector, by way of which an image of the pupil of the scanning device (3) is formed in the pupil of the other scanning device (11), and an optical system, which focusses beams, passing in a parallel manner into the device, onto a detector as a signal receiver, after leaving the scanning devices characterized in that an image of the pupil is formed by means of an afocal optical system which comprises the concave reflector (5) and a convex reflector (9) concentric to and having half the radius of curvature of the concave reflector (5) and which is disposed in such a way that the common centre of curvature (6) is at the middle of the connecting line of the centres of rotation (4, 10) of the scans, and the optical system (2) focusses parallel beams onto the detector (1).

2. A device according to claim 1, characterized in that the first scanning device is in the form of a rotating reflector polygon (3) and the second scanning device is in the form of a pivotable reflector (11).

3. A device according to claim 1, characterized in that the first scanning device is in the form of a pivotable reflector and the second scanning device is in the form of a rotating reflector polygon.

4. A device according to claim 1, characterized in that the first and the second scanning devices are in the form of rotating reflector polygons.

5. A device according to claim 1, characterized in that the first and the second scanning devices are in the form of pivotable reflectors.

6. A device according to one of claims 2 to 4, characterized in that the reflector surfaces of the polygon are disposed parallel to its axis of rotation.

7. A device according to one of claims 2 to 4, characterized in that the reflector surfaces of the polygon are inclined with respect to its axis of rotation.

8. A device according to one of the preceding claims, characterized in that the concave reflector (5) is formed aspherically.

9. A device according to one of the preceding claims, characterized in that the concave reflector (5) is formed as a Mangin reflector.

10. A device according to one of the preceding claims, characterized in that a preferably concentric Bouwers lens is disposed in the path of rays of the concave reflector (5).

11. A device according to one of the preceding claims, characterized in that a concentric Bouwers lens is formed and disposed concentrically in the path of rays of the spherical reflector (5) in such a manner that the geometric locus (8) of the detector image (7) lies on one of the surfaces of the Bouwers lens (12) and the convex reflector (9) is vapour deposited at this point as reflector strips onto the Bouwers lens (12).

12. A device according to one of the preceding claims, characterized in that for the detector (1) an autocollimation reflector is provided, which by means of its opening delimits the aperture angle of the incident rays, and which outside this angle reflects the rays, originating at the detector, back onto the latter.

13. A device according to one of the preceding claims, characterized in that a restriction diaphragm, which acts as a reference radiating system, is disposed symmetrically to the optical axis on the edge of the geometric locus (8).

**Revendications**

1. Dispositif pour le balayage d'un champ d'image selon deux directions de balayage essentiellement perpendiculaires l'une à l'autre, avec deux appareillages de balayage distincts l'un de l'autre pour ces deux directions, avec un miroir concave par l'intermédiaire duquel une image de la pupille de l'un (3) des appareillages de balayage se forme sur la pupille de l'autre appareillage (11) de balayage, et avec un système optique qui focalise le faisceau, entrant parallèlement dans le dispositif après avoir quitté les appareillages de balayage, sur un détecteur jouant le rôle de récepteur de signaux, dispositif caractérisé en ce que l'image de la pupille est formée par un système optique afocal, constitué du miroir concave (5) et d'un miroir convexe (9) concentrique à ce miroir concave avec un rayon de courbure égal à la moitié de celui du miroir concave (5), et disposé de façon telle que le centre de courbure commun (6) est au milieu de la ligne de jonction des points de rotation (4, 10) des balayages et ce système optique (2) focalisant sur le détecteur (1) le faisceau parallèle.

2. Dispositif selon la revendication 1, caractérisé en ce que le premier appareillage de balayage revêt la forme d'un polygone à miroir rotatif (3) tandis que le second appareillage revêt la forme d'un miroir (11) susceptible de pivoter.

3. Dispositif selon la revendication 1, caractérisé en ce que le premier appareillage de balayage revêt la forme d'un miroir susceptible de pivoter, tandis que le second appareillage de balayage revêt la forme d'un polygone à miroir rotatif.

4. Dispositif selon la revendication 1, caractérisé en ce que le premier et le second appareillage de balayage revêtent la forme de polygones à miroirs rotatifs.

5. Dispositif selon la revendication 1, caractérisé en ce que le premier et le second appareillage de balayage revêtent la forme de mirois susceptibles de pivoter.

6. Dispositif selon une des revendications 2 à 4, caractérisé en ce que les surfaces à miroir du polygone sont disposées parallèlement à l'axe de rotation de celui-ci.

7. Dispositif selon une des revendications 2 à 4, caractérisé en ce que les surfaces à miroir du polygone sont inclinées par rapport à l'axe de rotation de celui-ci.

8. Dispositif selon une des précédentes revendications, caractérisé en ce que le miroir concave (5) est asphérique.

9. Dispositif selon une des précédentes revendications, caractérisé en ce que le miroir concave (5) est un miroir Mangin.

10. Dispositif selon une des précédentes revendications, caractérisé en ce qu'une lentille de Bouwers, de préférence concentrique, est disposée sur le trajet des rayons du miroir concave (5).

11. Dispositif selon une des précédentes revendications, caractérisé en ce qu'une lentille de Bouwers concentrique est constituée et disposée de façon telle sur le trajet des rayons du miroir sphérique (5) que le lieu géométrique (8) de l'image (7) du détecteur se situe sur une des faces de la lentille de Bouwers (12) et que le miroir convexe (9) est déposé par vaporisation à cet emplacement sur la lentille de Bouwers (12) sous la forme de bandes à miroir.

12. Dispositif selon une des précédentes revendications, caractérisé en ce qu'il est prévu pour le détecteur (1) un miroir d'autocollimation, qui délimite par son ouverture l'angle d'ouverture du rayonnement incident, et qui, en dehors de cet angle, renvoie sur le détecteur le rayonnement en provenance de celui-ci.

13. Dispositif selon une des précédentes revendications, caractérisé en ce qu'un diaphragme de limitation, jouant le rôle de source de rayonnement de référence, est disposé symétriquement par rapport à l'axe optique au bord du lieu géométrique (8).

FIG. 1

FIG.2

FIG. 3

FIG.4

FIG. 5

Fig. 6